# EUROPEAN PATENT APPLICATION

(11) **EP 4 088 602 A1**
(43) Date of publication of application: **16.11.2022**
(21) Application number: 21173559.2
(22) Date of filing: 12.05.2021
(51) Int. Cl.: A41D 13/11, A62B 23/02, B01D 39/16, D04H 3/08

(54) **FACE MASK WITH FILTER MEDIUM FROM SPLIT MULTICOMPONENT FILAMENTS AND MELTBLOWN FIBRES**

(71) Applicant: Carl Freudenberg KG, 69469 Weinheim (DE)
(72) Inventor: Khedimi, Achraf, 68000 Colmar (FR); KERHAULT, Jean-Francois, 68766 Hockenheim (DE); Burckel, Marie, 68190 Ensisheim (FR); Gödicke, Dr. Birgit, 67283 Obrigheim (DE)

(57) **Abstract**

The invention relates to a face mask for protection against infectious agents with a filter medium, which comprises at least two spunbond nonwoven layers, which comprise multicomponent filaments, which are split at least partially into elementary filaments, and at least one meltblown fiber layer, which is positioned between the two layers of spunbond nonwoven. The invention also relates to uses of filter masks and face masks.

## Description

The invention relates to a face mask with a filter medium, which comprises at least two spunbond nonwoven layers and at least one intermediate meltblown fiber layer, and uses thereof.

### State of the Art

Various types of face masks are available for respiratory protection. Filtering half masks (FFP = Filtering Face Piece) are articles of personal protective equipment (PPE) and have the purpose to protect the wearer from particles and aerosols. The design of filtrating half masks is subject to variations. Masks are available with or without exhalation valve. Masks without a valve can filter the incoming and outgoing air, thereby providing protection for the wearer and for others. Masks with a valve can only filter incoming air and are thus not designed for protecting others. Properties and requirements of filtering half masks are defined in the standard DIN EN 149:2001-10.

Medical face masks (mouth and nose protection, MNP, face mask, mouth protection, surgical mask) are used predominantly for protection of others against exposition to possibly infectious aerosols from the person carrying the face mask. When tightly fitted, they can also provide protection for the wearer, which is however not the primary purpose of the mask. The standard DIN EN 14683:2019 is pertinent for medical half masks. Medical half masks are not only used in medical applications, but also in everyday life. Medical masks can be worn by patients and other persons for reducing the risk of spreading an infection, especially in an epidemic or pandemic situation. Medical face masks are of high relevance for medical staff and the public against COVID-19 disease, which is caused by the coronavirus SARS-CoV2.

In the state of the art, medical face masks typically have a three-layer structure. Frequently, this is composed of a polypropylene spun nonwoven support layer, an electrostatically charged filter layer from meltblown microfibers and a polypropylene spun nonwoven cover layer. Only the filter layer, which is characterized by highly fine meltblown microfibers, contributes to the removal of aerosols. The support layer is directed towards the mouth and provides only mechanical protection. The outer cover layer also provides mechanical protection for the filter layer. It is common practice that the filter layer is electrically charged for increasing the filtration efficiency.

The filtration efficiency of the filter layer defines the performance class and the pressure drop/breathing resistance of the face mask. DIN EN 14683:2019 defines different performance classes as follows:

**Table 1 - Performance requirements for medical face masks**

| Test | Type I | Type II | Type IIR |
|---|---|---|---|
| Bacterial filtration efficiency (BFE) [%] | ≥ 95 | ≥ 98 | ≥ 98 |
| Differential pressure [Pa/cm²] | < 40 | < 40 | < 60 |

The standard suggests that medical face masks of type I should be used only for patients and other persons for reducing the risk of spreading an infection, especially in epidemic or pandemic situations. Masks of type I are not intended for medical staff in operation rooms or other medical institutions with similar requirements.

Common face masks have various disadvantages. Especially in view of the COVID-19 pandemic, there is still a high need for providing face masks having high filtration efficiency and wearer comfort, but which are at the same time inexpensive and easily available, to medical staff, persons having intense contact to others and the public. Generally, also the ratio of the contradictive properties filtration efficiency and air permeability could still be improved for known masks.

It is another known problem that masks having a high filtration efficiency can often be used only once, because the filtration efficiency is reduced by washing. This problem is especially given for filter media which are electrostatically charged, such as conventional filter media comprising fine meltblown fibers. Face masks which are not washable must be discarded after use. As a result, the face masks are relatively expensive and high amounts of waste are generated. Besides, high amounts of face masks are required, which may not be easily available in case of urgency. Thus, it would be desirable to provide an efficient face mask, which is washable and re-usable.

WO 98/37779 discloses a conventional face mask, in which the filter medium is a laminate of a spunbonded nonwoven layer, an intermediate meltblown fabric and a second spunbonded nonwoven layer. Such filter media are also known as SMS materials. The filter medium is electrostatically charged. It is a disadvantage of such electrocharged filter media that such a face mask cannot be washed and re-used. This is because the filtration efficiency requires electrostatically charging, which disappears during washing. Moreover, the filtration performance and wearer comfort of such face masks could still be improved also without washing.

Spunbond nonwovens which comprise split multicomponent filaments are known in the art. They are commercially available from Freudenberg, DE, under the trademark Evolon. Respective materials for various uses are described for example in EP 3 165 655 B1 or DE 10 2004 036 099 A1.

EP 3 424 700 A1 relates to composite materials comprising a layer of split multicomponent fibers and a meltblown fiber layer. The composite laminate is subjected to hydroentanglement, such that the fibers from both layers become intertwined with each other and protrude into the adjacent layer. Uses of the composite material for removing infectious agents from air or for face masks are not disclosed.

WO 2010/073149 discloses a nonwoven web from partially split multicomponent fibers, which can be bonded to a meltblown web. Specifically, a double layer of spunbond nonwoven is combined on one side with a meltblown layer. The laminate is subjected to hydroentangling, such that the fibers from different layers are intertwined and protrude into other layers. The elementary filaments have different transition temperatures. The filaments with the lower softening temperature are used as bonding fibers for thermally bonding the layers. The composite materials can be used for various applications. Uses of the composite material for removing infectious agents from air or for face masks are not disclosed.

Overall, there is a need for improved face masks for filtering infectious agents, which have a high filtration efficiency, high comfort for the wearer, are washable and re-usable.

### Problem of the invention

The problem of the invention is to provide face masks for protection against infectious agents, which overcome the above mentioned problems. Specifically, the face mask shall have high filtration efficiency and high comfort for the wearer. The air permeability shall be high such that the breathing resistance is low. Besides, face masks shall be provided, which can be manufactured in a simple and efficient process, from conventional materials, if required in high amounts and at relatively low costs.

It is a special problem to provide such face masks, which are re-usable and washable. Preferably, the face mask should still have high filtration efficiency and wearer comfort after one or even more washing treatments, especially at high temperature.

### Disclosure of the invention

Surprisingly, the problem underlying the invention is solved by face masks and uses according to the claims. Subject of the invention is a face mask for protection against infectious agents with a filter medium, which comprises at least two spunbond nonwoven layers, which comprise multicomponent filaments, which are split at least partially into elementary filaments, and at least one meltblown fiber layer, which is positioned between the two layers of spunbond nonwoven.

Surprisingly, the face mask with a filter medium from two spunbond nonwoven layers of partially split elementary filaments and an intermediate meltblown fiber layer can provide high filtration efficiency and wearer comfort, whereas at the same time, the face mask can be washable and can be re-used. These advantages are achieved by the specific combination of materials and layers as outlined in the following.

A face mask is a mask which covers mouth and nose, thereby providing a barrier against direct transmission of infectious agents. Such face masks are also referred to as medical masks or surgical masks. Typically, the mask is a half mask. The face mask shall protect the wearer and/or others from infectious agents. Infectious agents are typically germs, mostly bacteria or viruses. Typically, such face masks remove aerosol particles from the breathing air. Aerosols are suspensions of liquid particles (droplets) or fine solid particles in air. The particle diameters typically range from 0.1 to 10 µm. Breathing air may comprise liquid aerosol particles, typically in the form of droplets, which may comprise infectious agents. The aerosols can be released from the mouth of humans, for example during speaking, breathing or sneezing, or can be present in the inhaled air.

The face mask comprises a filter medium. The term "filter medium" refers to the part of the face mask, which mechanically or physically removes aerosol particles in liquid or solid form from the inhaled or exhaled air. The filter medium is flat and consists of multiple layers which are stacked over each other. Normally, the breathing air enters and transverses the layers in approximately vertical direction. Typically, the filter medium described herein is the only filter medium of the face mask.

Surprisingly, it was found that the inventive face mask can combine high filtration efficiency with high breathing activity. This is advantageous, because it is difficult to bring these opposite parameters into accordance with each other. In the art, it is generally observed that the filtration efficiency of fiber materials tends to be relatively low, if air permeability is high, and vice versa. Overall, it is advantageous that an efficient face mask can be provided with a filter medium consisting of only a low number of conventional components. The inventive face mask can have a low differential pressure (pressure drop), and thus a low breathing resistance. Thereby, the comfort of the mask for the wearer is high, although the filtration performance is also high. This can be especially advantageous at a work place, such as a medical facility, but also at a production site, gastronomy or retail location, during exercise and sport, or in crowd gatherings. It is also advantageous when the face mask is worn over a long time period, for example for at least 1 or at least 2 hours. The face mask is thus highly suited for persons who are medical staff, or who are not medical staff.

In a preferred embodiment, the filter medium and/or the face mask do not comprise a further layer, which is not a filter medium. It is an advantage that the face mask can be provided without additional layers, such as support or cover layers. The outer spunbond nonwoven layers of the filter medium can have relatively high mechanical stability, and thus function as cover layers. In contrast, conventional face masks, in which the filter medium comprises a fine fiber meltblown on the outer surface, usually require outer support and/or cover layers.

The filter medium comprises at least two spunbond nonwoven layers. The spunbond nonwoven layers comprise, preferably consist of, multicomponent filaments, which are split at least partially into elementary filaments.

Spunbond nonwovens consist of continuous filaments (fibers), which are spun from polymer melts and drawn, laid on a support to form a nonwoven precursor (felt), and bonded to each other to form the nonwoven. In the spinning process, continuous filaments are obtained, also referred to as endless filaments (in contrast to staple fibers of defined length). Herein, the terms fiber and filament are used as synonyms. The spunbond nonwoven is a nonwoven fabric or sheet.

By definition, a nonwoven comprises fibers which have been subjected to bonding by friction, adhesion and/or cohesion. Typically, the nonwoven fibers have random orientation. Preferably, the nonwoven fabric is defined according to ISO 9092:1988.

Spunbond nonwovens are advantageous because they are relatively stable, exhibit low particle loss and have a relatively smooth surface. In the inventive face mask, a spunbond nonwoven layer comprising the split multicomponent filaments can form the inner surface of the filter medium, such that it is in direct contact to the skin of the wearer. This is especially advantageous, because split elementary filaments are especially fine, soft and elastic and can thereby provide high wearer comfort.

The spunbond nonwovens consist of multicomponent filaments. The multicomponent filaments are splittable. They are split at least in part into elementary filaments (monofilaments). Splittable multicomponent filaments consist of at least two different elementary filaments, which are aligned to each other in parallel. Before, splitting, the elementary filaments have a phase interphase between each other and adhere to each in direction of the filament length. The adhesive forces are relatively loose. The multicomponent filaments are preferably spilt into elementary filaments mechanically. A hydroentanglement (fluid jet; water jet) treatment is especially suited, because it consolidates the fibers into a nonwoven at the same time. Spunbond nonwovens which have been treated accordingly are characterized by microregions, in which multicomponent filaments are split only partially or not at all. The ratio of split filaments can be adjusted time and/or energy of the splitting treatment. When applying a sufficiently long and/or energetic fluid jet treatment, spunbond nonwovens are obtainable which consist predominantly of elementary filaments. Preferably, at least 60%, especially at least 80%, at least 90% or at least 95% of all filaments in the nonwoven are elementary filaments, based on the total weight of the filaments. The ratio of split filaments can be determined by microscopic analysis of multiple randomly chosen areas of the nonwoven. In contrast, bicomponent filaments of the core/sheath type are generally not splittable. They are typically used for thermally bonding the fibers to each other after softening the sheath component.

In a preferred embodiment, each spunbond nonwoven layer was subjected to hydroentangling before combination with the other layers of the filter medium, such that the multicomponent filaments were split at least partially into elementary filaments in the spunbond alone. This is advantageous, because all layers of the filter medium preserve their integrity and advantageous properties. Moreover, in this embodiment fibers from different layers do not become intermingled and/or do not protrude adjacent layers. This is advantageous, because it is assumed that an air gap between the layers can improve filtration performance and reduce pressure drop. In contrast, subjecting the filter medium, which already comprises the meltblown fiber layer, to hydroentanglement could lead to reduced filtration performance, undesired densification, and protrusion of fibers from one layer into other layers.

In a preferred embodiment, the multicomponent filaments comprise at least 8, preferably at least 16, elementary filaments. Preferably, the multicomponent filaments comprise 16, 24, 32, 48 or 64 elementary filaments. Preferably, the number of elementary filaments is 8 to 64, especially 16 to 48. In these embodiments, it is preferred that the multicomponent filaments are bicomponent filaments which have a PIE shape. Such high numbers of elementary filaments can be advantageous, because fine elementary filaments can be provided, such that the nonwoven after splitting is soft, has high filtration performance and high wearer comfort.

In a preferred embodiment, the elementary filaments have a titer in the range of 0.01 dtex to 2.0 dtex, preferably between 0.02 dtex and 1.0 dtex. It is especially preferred that the titer is between 0.03 dtex and 0.6 dtex, more preferably between 0.05 dtex and 0.4 dtex, or even between 0.075 and 0.3 dtex. Especially good filtration and breathing properties can be obtained, when the titer is between 0.1 and 0.2 dtex. For example, elementary filaments having such low titers can be obtained by known methods from bicomponent filaments of type PIE 16. It was found that such fine filter media can have an especially high filtration efficiency and air permeability. Such monofilaments, which are obtained from split multicomponent filaments, are very fine and can also confer high elasticity and softness to the filter medium, thereby increasing the wearer comfort.

Preferably, the multicomponent filaments comprise two, three or more different polymer components. Different types of elementary filaments are then obtained by splitting, which each consist of one of the polymer components. The spunbond nonwoven thus comprises at least two different types of elementary filaments. Preferably, the types of elementary filaments comprise different polymers. The elementary filament types may comprise different titers. Preferably, the titer difference of the components is at least 0.02 dtex and/or at least 20%. By combining types of elementary filaments, which have a slight variation in titer, a higher filtration efficiency may be achieved. Preferably, the number of each elementary filament type in the multicomponent filaments is identical. Preferably, the multicomponent filaments are bicomponent filaments. It is an advantage of bicomponent filaments that high splittability can be achieved, whereas the material has a relatively simple structure.

In a preferred embodiment, each spunbond nonwoven layer has a basis weight of 10 to 60 g/m², preferably from 20 to 50 g/m², more preferably from 20 to 40 g/m². It was found that an especially high BFE and air permeability can be obtained thereby. The layers may comprise identical or different basis weights. According to the invention, the spunbond layers are not electrostatically charged.

In a preferred embodiment, the fiber diameter of the inner spunbond nonwoven layer, which faces the mouth, is smaller than of the outer spunbond nonwoven layer. This can be advantageous, because the outer layer may confer stability to the filter medium, whereas the inner layer can have higher filtration efficiency.

In a preferred embodiment, one or both layers of the spunbond nonwoven consist of sublayers of the same type, which are preferably loosely assembled. For example, a spunbond layer may consist of 2 to 5 sublayers, especially 2 or 3 sublayers. it was observed that, possibly due to additional air gaps, the spunbond filter layer, which is formed from two sublayers, can have better properties than a comparable single layer of the same total base weight. Typically, a filter layer from 2 or more sublayers can have higher bacterial filtration efficiency (BFE) and higher air permeability.

The spunbond nonwoven is obtainable in a spinning process, in which the multicomponent filaments are laid onto a support, followed by splitting multicomponent filaments into elementary filaments and consolidation, typically by hydroentangling (water jet needling). In such a process, the fibers are mechanically bonded such that a consolidated nonwoven is obtained. Typically, hydroentangling does not only incur splitting, but also consolidation and intimate entangling of the single filaments. Therefore, nonwovens from split multicomponent fibers have advantageous properties compared to other nonwovens from fibers of the same titer, such as higher stability, density or uniformity. Nonwovens from split fibers are also characterized by small regions, in which split elementary filaments remain aligned more or less in parallel.

Overall, spunbond nonwovens from split multicomponent filaments have a defined and unique structure, which has advantageous properties.

Preferably, the elementary filaments which have cross-sections which are not round, but have edges structures. This is advantageous, because irregularly shaped elementary filaments have relatively low mobility towards each other. In an especially preferred embodiment, the multicomponent filaments, especially bicomponent filaments, have a pie structure (PIE structure, orange structure). The term "pie" thereby defines the optimal cross-section of the bicomponent filament, but also describes approximately the cross-section of the elementary filaments. A pie shape is advantageous, because the bicomponent filaments can be split conveniently into elementary filaments having a pie or wedge-like structure, thereby increasing the mechanical stability of the nonwoven. Upon splitting, the multicomponent filaments fall apart into the respective number of elementary filaments (mono-filaments). Preferably, the bicomponent filaments have the same number of each elementary filament (for example, 8 elementary filaments of each type in PIE16 bicomponent filament). The bicomponent filaments preferably comprise alternating mono-filaments. Also preferred are hollow-pie structures, which comprise a hollow space in axial direction.

Especially preferred are spunbond nonwoven layers having a basis weight of 10 to 60 g/m², made from bicomponent filaments in pie form from 16 segments, wherein the elementary filaments have a fiber titer of 0.05 to 4 dtex. It was found that a filter medium comprising such spunbond nonwoven layers can have especially high BFE and air permeability.

Preferably, the multicomponent filaments are produced by melt-spinning. Thereby, thermoplastic polymers are molten and spun from the melt. Preferably, the fiber forming polymers are thermoplastic. Preferably, they are selected from polyester, polyamide, polyolefin and/or polyurethane. Especially preferred are bicomponent filaments having a polyester component and a polyamide component.

It is preferred that the multicomponent filaments are split as much as possible. Thereby, the homogeneity and fineness of the spunbond nonwoven can be increased, which leads to higher filtration efficiency. In order to achieve high splittability, it is advantageous that at least two elementary filaments comprise different thermoplastic polymers, which are preferably incompatible. Incompatible polymers in combination result in pairs of filaments which have no or only low adhesive bonding towards each other. As incompatible polymer pairs, preferably polyester, polyamide, polyolefin and/or polyurethane are used. Polymer pairs with a polyamide and a polyester, especially polyethylene terephthalate (PET), are especially preferred due to their low adhesiveness. Polymer pairs comprising at least one polyolefin are also preferred due to low adhesiveness. Especially preferred are combinations of one polyester, especially PET, polylactic acid and/or polybutylene terephthalate, with a polyamide (PA), especially polyamide 6, polyamide 66 or polyamide 46, if desired in combination with one or more of the above components, preferably polyolefins. Especially preferred is a combination of PET and polyamide 6, PET and polyamide 66. Further preferred are polymer pairs, which comprise at least one polyolefin, especially in combination with at least one polyester or polyamide. Preferred are thereby especially polyamide 6/polyethylene, PET/polyethylene, polypropylene/polyethylene, polyamide 6/polypropylene or PET/polypropylene. These combinations have relatively high splittability. In a preferred embodiment, the volume, length and/or weight ratio of the first to second elementary filaments is between 90:10 and 10:90, especially between 80:20 and 20:80.

The polymers are the fiber raw material of the filaments (the fiber forming component). The filaments may comprise conventional additives. The additives are not fiber raw materials, and typically not organic polymers. Additives can be added to the fiber polymers in order to modify their properties or improve workability. Suitable additives can be, for example, dies, fillers, antistatic agents, antimicrobial agents, such as copper, hydrophilic or hydrophobic modifiers or the like. For example, they can be present in an amount of up to 10 wt.%, preferably up to 5 wt.% or up to 2 wt.%, especially between 150 ppm and 10 wt.%, based on the total weight of the filaments.

Methods for producing suitable multicomponent filaments, which can be split into elementary filaments, are known in the art. The production of such filaments and nonwovens is described, for example, in EP 3 165 655 B1, FR 2 749 860 A, DE 10 2014 002 232 A1. The spunbond nonwovens can be produced, for example, with a spinning device of the trademark REICOFIL 4 (Reifenhauser, DE). In the following, suitable methods for producing filter media and spunbond nonwovens which can be used in the invention are described. If not disclosed otherwise, a layer of the spunbond nonwoven can be treated accordingly, or a filter medium consisting of multiple layers of the spunbond nonwoven.

The spunbond nonwoven can be subjected to mechanical treatment, in which the multicomponent filaments are split at least partially into the elementary filaments. Preferred is a fluid jet treatment, in which a fluid, such as a liquid or gas, is directed onto the nonwoven under pressure. Especially preferred is water jet treatment (hydroentanglement, water jet needling). Water is inexpensive and available in high amounts, and the nonwovens can be dried rapidly and without undesired residues. The filaments are split and admixed, thereby forming an intimate composite through friction and fiber locking. Thereby, a homogenous spunbond nonwoven can be obtained having high softness and elasticity. According to the invention, it is possible to consolidate each layer of the filter medium separately by fluid jet treatment, followed by a combination of the layers; or vice versa. The filter medium and/or spunbond nonwoven can be subjected to standard post-treatments, such as drying and/or shrinking.

In a preferred embodiment, the spunbond nonwovens are consolidated only hydroentangling, especially by water jet treatment. Accordingly, no additional consolidation treatment is performed, such as thermal bonding, chemical bonding or needle-punching. It was found that the multicomponent filaments can be split efficiently by fluid jet treatment only, whereas a high consolidation can be achieved.

In another embodiment, further consolidation treatments can be performed, such as mechanical consolidation, for example by calendering. In one embodiment, the nonwoven layer is pre-consolidated by calendering, followed by hydroentangling. The calendering is preferably carried out at low temperature, such that no thermal consolidation by softened fibers occurs. Consolidation of the filter medium and/or spunbond layer can be provided by ultrasonic treatment and/or calendering in a spot pattern. In an embodiment, the filter medium and/or layers thereof are consolidated only in partial regions. A consolidation in partial regions, which can be distributed evenly over the nonwoven area, may improve overall stability. However, in order to preserve advantageous properties of the nonwoven, especially for a multi-layer structure, only a minor portion of the area of the nonwoven should be consolidated in this manner, typically less than 10% or less or 5% of the total area. In order to not unduly decrease air permeability, the nonwoven could be thermally consolidated in an oven without applying pressure.

The face mask comprises at least one meltblown fiber layer. The layer is positioned between the spunbond nonwoven layers. The layers are combined with the flat surfaces on top of each other, in the form of a stack, such that the breathing air can pass all layers.

The term "meltblow" or "meltblowing" essentially refers to a spinning process, in which a thermoplastic fiber forming polymer is molten in an extruder, pumped through die holes and enters high-speed air streams when leaving the spinning nozzles. Typically, the hot air streams exit from the sides of the nozzles, guide the extruded liquid polymer streams and cause formation of very fine fibers. The fibers are deposited on a collector screen, such that a fine, typically self-bonded, web is formed. The meltblow process is different from spunlaid and spunbond technology, in which emerging polymer fibers are drawn onto a conveyor belt by suction. When the meltblown polymer fibers are collected on a surface below the meltblowing device, a meltblown fiber layer is obtained. For example, the meltblown fibers can have an average fiber diameter between 0.1 µm to 20 µm and a standard deviation of the fiber diameter of at least 100%. The fiber layer can be subjected to bonding, such that a meltblown nonwoven is obtained.

The meltblown fiber layer is preferably a nonwoven layer. Preferably, the meltblown nonwoven is consolidated by ultrasonic bonding. This is advantageous, because the fiber layer is not densified in the bonding procedure. However, the meltblown nonwoven can also be consolidated by other means, such as stitch bonding or thermal bonding.

Preferably, the average fiber diameter of the meltblown layer is between 0.1 µm and 10 µm. In a preferred embodiment, the average fiber diameter is between 0.5 µm to 7 µm. It was found that a filter medium with advantageous mechanical stability and filtration efficiency can be provided when adjusting the average fiber diameter within this range. The fiber diameter can be determined by scanning electron microscope (SEM) analysis. Preferably, the probes are gold-sputter coated. In this method, nonwoven webs are cut and placed onto carbon tape, fixed onto a metal stub, which then is gold sputter-coated. The sputter-coated sample stubs are then pictured by SEM with different magnifications and pictures are obtained. The pictures are fed into standard software (Image Access V12, Image Bildverarbeitung AG, CH) where the standard ruler at the bottom of each SEM picture is used as a reference to measure the fiber diameters manually. Statistical plots (average, standard deviation and CV%) can then be made with Microsoft Excel.

In a preferred embodiment, the meltblown fiber layer has a basis weight of 10 to 50 g/m², preferably 15 to 50 g/m², more preferably 20 to 40 g/m². It was found that an especially high BFE and air permeability can be adjusted thereby.

In principle, any synthetic polymers can be used for producing the meltblown fiber layer, which are applicable for meltblown processes in the art. Typically, the polymers are thermoplastic polymers which can be extruded. Preferred polymers are polyolefins, such as polypropylene or polyethylene, polyesters and copolyesters, such as polyethylene terephthalate, polybutylene terephthalate, polycarbonate or polylactate, polyamides, such as polyamide 6 or polyamide 6,6, halogenated polymers, such as polyvinylidenchloride, or (meth)acrylates, such as polymethylmethacrylate. Mixtures or copolymers of such compounds can also be used. In a preferred embodiment, the meltblown layer comprises or consists of polypropylene fibers. Polypropylene is especially suitable for filtering applications.

In a preferred embodiment, the meltblown layer is electrostatically charged. In this embodiment, the meltblown fibers are electret fibers, which can improve the filtering efficiency. The terms "electret" or "electrostatically charged" mean that the fibers were subjected to a treatment that imparts charges to a suitable dielectric polymer material, such as polyolefins. Typically, the charge includes layers of positive or negative charges trapped at or near the surface of the polymer, or charge clouds stored in the bulk of the polymer. The charge also includes polarization charges, which can be frozen in alignment of the dipoles of the molecules. Methods of subjecting a material to electreting are known in the art. These methods include, for example, thermal, liquid-contact, electron beam and corona discharge methods. In a preferred embodiment, the meltblown layer comprises or consists of polypropylene meltblown fibers which are electrostatically charged.

In another preferred embodiment, the meltblown layer and/or the filter medium are not electrostatically charged. In this embodiment, it is preferred that the meltblown fibers are polybutylene terephthalate (PBT) fibers. These fibers are advantageous, because a high filtering efficiency can be achieved without electrostatic charging. When using a meltblown fiber layer which is not charged, the initial filtration performance may be lower, but is not reduced upon washing.

Preferably, the meltblown layer is directly adjacent to the spunbond nonwoven layers, such that there are no other layers between the meltblown layer and the spunbond nonwoven layers. The layers of the filter medium (and if applicable of sublayers which form a layer) can be assembled to the filter medium by known means. It is preferred that the layers are combined only loosely, at least in the region through which the breathing air passes. Thus, an air gap is present between adjacent layers, which can improve filtration performance and air permeability. Preferably, the layers are attached to each other only in partial regions. The attachment can be evenly distributed over the area, or can be only or predominantly in peripheral regions of the layers. A connection in peripheral regions is preferred, because air permeability is not reduced thereby. Additionally, connections may be present which are not in peripheral regions. The layers can be attached to each other by conventional techniques, such as sewing or adhesive bonding, especially ultrasonic bonding. A label for back-tracing or differentiation can be printed directly onto the filter medium without further surface treatment.

Preferably, the filter medium is not subjected to consolidation, especially hydroentangling or calandering, after combining the spunbond nonwoven layers with the meltblown layer. Preferably, the layers which form the filter medium (if applicable, also the sublayers which form a layer) are provided separately from each other in their final form and assembled. This means that all steps for manufacturing each layer, such as fiber forming, splitting and consolidation, are carried out with the discrete layer and not with the assembled filter medium. Accordingly, it is highly preferred that the assembled filter medium is not subjected to consolidation, such as hydroentanglement or calandering. The individual layers in their final form and structure can be combined with each other to form the final filter medium. This is advantageous, because air gaps can be formed between the layers of the filter medium.

In a preferred embodiment, the filter medium has a total basis weight (base weight, area weight) of 40 to 300 g/m², preferably 50 to 200 g/m², and especially 60 to 150 g/m². Preferably, the basis weight is at least 40 g/m² or at least 50 g/m², in order to achieve sufficient mechanical stability and BFE. Preferably, the basis weight is not more than 200 g/m², or especially not more than 150 g/m², in order to preserve sufficient air permeability. In this regard, the basis weight can be relatively low, if the elementary filaments are relatively fine. Surprisingly, such a relatively low basis weight can be sufficient for fulfilling the requirements of medical face masks. Such a light material can also provide high wearer comfort, especially when the face mask is worn over extended time periods and/or during strenuous activity.

It is preferred that the filter medium and/or the layers thereof are not thermally consolidated, and especially not thermally consolidated over the entire area.

This means that the nonwoven layers have not been subjected to a temperature treatment over the entire area, in which the fibers or a melt adhesive has softened such that the fibers are adhered to each other. A non-thermally bonded nonwoven can be advantageous, as porosity, softness and/or elasticity can be preserved. In contrast, thermal consolidation can render the nonwoven more rigid and less porous, thereby decreasing air and moisture permeability.

The filter medium may comprise partial regions, especially peripheral regions, which connect the layers with each other or with other parts of the face mask, and/or which stabilize the face mask, such as sealing, adhesive or sewed seams. Such local connections in peripheral regions does not significantly affect the filter performance, and is not considered "consolidation" of the filter medium or layers.

In a preferred embodiment, the filter medium and/or the layers thereof are not chemically bonded. Especially, the filter medium and/or layers thereof are not consolidated with a binder. This means that the fibers are not bonded to each other by chemical reaction after spinning. Accordingly, no covalent bonds are created between fibers. This has the advantage that the nonwoven remains sufficiently soft and elastic, and that there is no danger that the wearer inhales binder, impurities, residues or side products from the reaction. Preferably, the filter medium and/or layers thereof are not mechanically consolidated by needle-punching. Such a treatment is not desired, because it could lead to formation of regions of higher and lower fiber density, such that the filtration efficiency could be reduced.

It is a special advantage of the inventive face mask that it is washable, and thus can be reused. Surprisingly, it was found that a high filtration efficiency can be preserved after washing, even after repeated washing. Moreover, some properties of the face mask, such as filtration efficiency or air permeability, may even be improved by washing. Preferably, the BFE of the face mask and/or filter medium is reduced by not more than 1%, more preferably by not more than 0.5%, after one household washing cycle according to DIN EN ISO 6339 at 60°C, more preferably at 95°C. Preferably, the BFE of the face mask and/or filter medium is not reduced by more than 2%, more preferably by more than 1%, after 5 or 10 household washing cycles according to DIN EN ISO 6339 at 60°C, more preferably at 95°C.

In a preferred embodiment, the face mask was washed at least once, preferably at least twice, more preferably at least 5, or even at least 10 times. In a preferred embodiment, the face mask is washed before being supplied to the user and/or worn by the user for the first time. Preferably, the face mask is worn between washing treatments (cycles), for example for at least an hour or day. Preferably, the washing is at elevated temperature, such as at least 40°C, preferably at least 60°C or at least 80°C. As used herein, the term "washing" refers to a conventional textile cleaning treatment, preferably in a washing machine. During washing, the face mask is preferably soaked in aqueous detergent solution and mechanically agitated, typically for at least 10 min or at least 30 min. Preferably, the washing is a standard treatment for textile fabrics according to DIN EN ISO 6330.

It is another advantage that washing can have the effect that the softness of the inventive face mask and wearer comfort are improved. Thereby, the drapability of the face mask can be improved, such that it fits more tightly and closer to the face, thereby providing a better protection.

In contrast, conventional face masks are generally not washable and not re-usable. It is generally assumed that the reason is the loss of electrostatic charge. Thus, filtration performance of conventional electret face masks after washing is generally inadequate, and the standard requirements are not met any more. In contrast, it was found for the inventive face mask can preserve high filtration efficiency can be maintained after washing, even when the intermediate meltblown fiber layer is electrostatically charged. Without being bound to theory, it is speculated that in the inventive face mask, the effect of washing on the spunbond nonwoven layers may compensate for loss of charge and reduction of filtration performance of an electret meltblown fiber layer during washing. Washing can have an advantageous effect on the filter performance of the spunbond layers, possibly because the mechanical forces can increase microstructure uniformity. Multicomponent filaments are split into elementary filaments by methods, typically hydroentangling, in which high mechanical forces are exerted on the fibers. Typically, this leads to formation of a microstructure which is not entirely uniform. The mechanical forces during washing may level such irregularities, for example by relaxing regions having internal tension. It is also conceivable that some multicomponent filaments, in which the elementary filaments still loosely adhere to each other, are split during washing. Accordingly, washing can increase uniformity, porosity and filtration efficiency of the spunbond nonwoven layers. This positive effect can be even more pronounced after several washing cycles. If the meltblown fiber layer is not initially charged, the filtration performance can even be increased by washing.

In another preferred embodiment, the filter medium and/or layers thereof are not electrostatically charged. In this embodiment, it is preferred that the meltblown fiber layer consists of or comprises polybutylene terephthalate (PBT) fibers. A filter medium with such a meltblown layer may have a high filtration efficiency without electrostatic charge. This is advantageous, because the absence of charging can improve the suitability for washing and reuse even more. Besides, filter media without electrostatic charge can be produced more conveniently and with lower energy consumption, and do not face problems of discharging during storage or use.

Preferably, the filter medium does not comprise additional non-fibrous filtering agents, such as adsorbents, such as activated carbon. Providing a filter medium which consists of only the fiber layers is convenient and economic, because no post treatment is required in which the filter medium is coated or leaded with such additional agents. Further, there is no risk that such agents are released from the filter medium and inhaled by the user.

In a preferred embodiment, the face mask and/or the filter medium has a bacterial filtration efficiency (BFE) according to DIN EN 14683:2019 of at least 95%, at least 98%, or preferably at least 99% or 99.5%. It was found that the filter medium can have such a high BFE that the face mask can fulfill the requirements for medical face masks of type I, II or even IIR. Thus, face masks of the invention can be highly suited for medical staff. However, even face masks having lower performance can be advantageous. For example for preventing spreading of a disease such as COVID-19, it can be reasonable to provide face masks for the public, which are not costly and available in high quantity, and which further have a high wearer comfort, but have a BFE below 95%. When facing the problem to supply large numbers of face masks, it can be more efficient to provide relatively simple masks, rather than more complicated but more efficient masks, in order to achieve an epidemiologic goal. Empirically, the discipline of wearers, especially from the public, can increase when the wearer comfort is high and breathing is impaired only little. Therefore, in one embodiment the face mask can have a BFE of 80% up to 95%, or at least 85%, or at least 90%.

Preferably, the face mask has a differential pressure according to DIN EN 14683:2019 of < 40 Pa/cm², preferably less than 35 Pa/cm², more preferably less than 30 Pa/cm², or even less than 20 Pa/cm². Such an air permeability is relatively high for face masks having a high BFE. The standard DIN EN 14683:2019 requires that a face mask of type I and II has a differential pressure < 40 Pa/cm², which corresponds to an air permeability of > 133 l/m²s according to DIN EN ISO 9237 at 100 Pa. A low differential pressure or high air permeability means that the breathing resistance is low, thereby allowing the wearer to wear the mask for extended time periods and carry out exhaustive tasks. In a preferred embodiment, the face mask and/or the filter medium has an air permeability of at least 100 l/m^{2.}s, preferably more than 133 l/m^{2.}s, especially preferred more than 175 l/m^{2.}s, determined according to EN ISO 9237:1995 at 100 Pa.

In a preferred embodiment, the face mask and/or filter medium fulfills the performance requirements for medical face masks of DIN EN 14683:2019, specifically of DIN EN 14683:2019, type I, type II or type IIR, preferably with regard to bacterial filtration efficiency (BFE) and/or differential pressure, preferably also regarding splash resistance and/or microbiological purity. As far as herein reference is made to the standard DIN EN 14683:2019, it is preferably DIN EN 14683:2019:6. The splash resistance can be adjusted by known methods, for example by hydrophobizing the filter medium. Microbiological purity can be adjusted as known in the art by avoiding contaminations during production, handling and storage.

Preferably, the air permeability of the face mask and/or filter medium according to EN ISO 9237:1995-12A is at least 20 mm/s, more preferably at least 30 mm/s, determined with a test surface of 20 cm² and a differential pressure of 200 Pa, preferably as the mean value of 100 or 50 single values.

In a preferred embodiment, the filter medium and/or the layers thereof have an average pore size of 10 µm to 50 µm and/or a maximum pore size of 30 µm to 120 µm, when having a basis weight of 80 g/m² or 100 g/m², as determined with a pore size measuring device PSM 165 of the company TOPAS, DE, according to the provisions of the producer and/or ASTM E1294-89 and ASTM F-216-03. In a preferred embodiment, the filter medium has a thickness of 0.1 mm to 1 mm, especially between 0.2 mm and 0.6 mm, determined according to DIN ISO 9073-2:1995, part 2, for normal nonwovens.

In a preferred embodiment, the face mask does not comprise an additional layer, apart from the filter medium itself. This is advantageous, because a simple face mask can be provided from only a low number of components. It was found that such a simple face mask does not only have high filtration efficiency, but also high mechanical stability. In case of a filter medium having three or more layers, the outer layers could have the function of support and cover layers. They may comprise filaments, which have a relatively high diameter, and thereby confer mechanical stability to the filter medium. Such face masks, in which the filter medium is not combined with further layers, can be produced simply, rapidly and cost-efficiently in high amounts, which is highly relevant in the case of an epidemic or pandemic.

In another embodiment, the face mask comprises at least one additional layer, which is not a filter medium. The additional layer can be a support layer or cover layer. The additional layer can be connected with the filter medium, over the flat area, and as the filter medium is traversed by the breathing air. The connection between the layers is typically loose, such that air gaps are present in between. A support layer can further increase the mechanical stability of the face mask. A cover layer shelters the filter medium from the environment, for example from mechanical damage or moisture. The additional layer is different from a filter medium, since it does not significantly remove infectious agents from breathing air. Preferably, it consists of fibers and/or is preferably a textile layer, more preferably a nonwoven or woven fabric. The fiber diameter of such an additional layer could be above 0.1 mm or above 0.25 mm. Typically, support layers have significantly stronger (thicker) fibers than the filter medium and increase the pressure difference of the filter medium not significantly or not at all. For example, the at least one additional layer could decrease the air permeability of the filter medium by less than 5% or even less than 1%. Most importantly, the additional layer is not a filter medium for removing droplets and/or infectious agents. The additional layer can have a BFE of < 5%, especially < 2% or even about 0%. Such an additional layer could be connected to the filter medium by conventional means, such as sewing or bonding, especially in peripheral regions of the layers, especially by ultrasonic bonding.

In a preferred embodiment, the face mask has the following properties:
- The filter medium consists of the two spunbond nonwoven layers and one meltblown fiber layer,
- the filter medium has a basis weight of 50 to 150 g/m²,
- the face mask does not comprise an additional layer, and
- the multicomponent filaments were split at least partially into the elementary filaments by hydroentangling before the spunbond nonwoven layers were combined with the meltblown layer.

Preferably, the face mask is a medical product, especially a mouth-nose protection (MNP), also named surgical mask, clinical mask or OP-face mask. This refers to a face half mask with a filter medium which is attached with fixation means, such as elastic bands or strips, to the back of the head or behind the ears. If desired, an integrated flexible metal frame can align the upper part of the half mask to the nasal bridge, in order to keep the field of vision free and prevent upward exhalation. After single use, the MNP could be discarded. However, it is preferred that the MNP is washable and reusable. An MSP can also be used for preventing transmission of infectious agents by the public. In a preferred embodiment, the face mask is a medical face mask, a mouth/nose protection, a folding mask, a mask basket, a filtering half mask or a comparable protection of mouth and nose.

Typically, the face mask comprises fixation means for attachment over the mouth and chin of the wearer. For example, means such as ribbons or clips can ensure that the mask is tightly aligned to the sides of the face. Face masks can have various forms and structures, and may comprise additional features such as a face protection, for protecting the wearer from splashes or drops, an anti-fog function, or a nose clip for adjusting the mask to the form of the nose. The filter medium may be fixed in a frame or by other means.

Subject of the invention is also the use of a filter medium, which comprises at least two layers of spunbond nonwoven, which comprise multicomponent filaments, which are split at least partially into elementary filaments, and a layer of meltblown fibers, which is positioned between the two layers of spunbond nonwoven, for removing infectious agents from air.

Subject of the invention is also the use of a face mask as described herein for filtering air and/or for removing infectious agents from air during wearing. The user can be medical staff, or persons having close contact to others, such as care staff, or persons from the general public, who do not have a medical profession.

Subject of the invention is also a filter medium for removing infectious agents from air, which comprises at least two layers of spunbond nonwoven, which comprise multicomponent filaments, which are split at least partially into elementary filaments, and a layer of meltblown fibers, which is positioned between the two layers of spunbond nonwoven, wherein the filter medium has a basis weight of 60 to 200 g/m2, wherein the multicomponent filaments were split by hydroentangling before the spunbond nonwoven layers were combined with the meltblown layer.

The inventive face mask and uses solve the problem underlying the invention. The face mask can have high filtration efficiency (BFE) and high wearer comfort. The air permeability can be high such that the breathing resistance can be low. The face mask has a simple structure and is available in an rapid and convenient manner, in high quantities and at relatively low costs. The face mask is washable and thus re-usable, whereas high filtration performance and advantageous properties can be maintained after washing.

### Working examples

### Example 1: Properties of filter medium

A filter medium was prepared from 3 nonwoven layers. The outer layers were spunbond nonwovens consisting of partially split bicomponent filaments of trademark Evolon EVO 30 PK (Freudenberg, DE), which have a basis weight of about 30 g/m², and a thickness 0.2 mm according to ISO 90723-2. The bicomponent filaments consist of 16 alternating segments in pie-shape (PIE16) of polyester (PET) and polyamide 6 at a polymer ratio of 60/40 (wt.%). The titer of the monofilaments is between 0.1 and 0.2 dtex. The spunbond nonwovens had been produced similarly as in example 1 of EP 3 165 655 B1. The nonwovens were consolidated by water jet treatment, such that the bicomponent filaments were split. The spunbond nonwovens were not consolidated by needling. The intermediate layer was a thermally bonded meltblown nonwoven consisting of polypropylene electret microfibers (trademark FA 25, Freudenberg, DE), which has a basis weight of 25 g/m²; a thickness 0.25 mm according to ISO 90723-2, and an air permeability according to EN 9237 of 550 l/(m² s) at 200 mPa and 242 l/(m² s) at 100 mPa. The three nonwoven layers were loosely assembled with each other, such that air gaps were present in the region passed by the breathing air.

The bacterial filtration efficiency (BFE) according to DIN EN 14683:2019 + AC:2019 Annex B was 99.88% (average from 5 test specimen, mean particle size of the bacterial aerosol of 2.75 µm). The differential pressure (breathability) according to DIN EN 14683:2019 + AC:2019 Annex C was 38.0 Pa/cm² (average of 5 specimen). The BFE and differential pressure met the requirements for medical face masks of type I and II of DIN EN 14683:2019. They are suitable for use by medical staff in operation rooms and similar demanding applications.

### Example 2: Properties after washing

The three layer filter medium of example 1 was washed at 60°C and the properties were examined under the conditions as outlined in example 1. After washing, the bacterial filtration efficiency (BFE) according to DIN EN 14683:2019 + AC:2019 Annex B was 99.51% (average from 5 test specimen, mean particle size of the bacterial aerosol of 2.75 µm), and the differential pressure (breathability) according to DIN EN 14683:2019 + AC:2019 Annex C was 39.0 Pa/cm² (average of 5 specimen). Overall, even after washing the BFE and differential pressure still met the requirements for medical face masks of type I and II of DIN EN 14683:2019. Even after washing, they are suitable for use by medical staff in operation rooms and similar demanding applications.

### Example 3 (comparative):

The properties of a filter medium were examined, which consisted of three layers of the spunbond nonwoven from the split bicomponent filaments used in example 1 (trademark Evolon Evo30PK, Freudenberg, DE; basis weight 30 g/m²). The mean bacterial filtration efficiency (BFE) according to DIN EN 14683:2019 for three test specimens was 91.9% and the average differential pressure according to DIN EN 14683:2019, Annex C for five test specimen was 24.3 Pa/cm². Further, the filtration efficiency of three comparative face masks was examined before and after washing. The face masks had a filter medium consisting of two layers of the spunbond nonwoven from split bicomponent filaments as in example 1, which had a higher basis weight of 40 g/m² (trademark Evolon Evo40PK, Freudenberg, DE). The face masks were subjected to ten washing cycles at 90°C. The filtration efficiency before and after washing was improved significantly from 91.9 to 93.4%. This result demonstrates that washing can even improve the performance of a filter medium which consists of nonwovens from split multicomponent filaments. This suggests that the same advantageous effect occurs in the spunbond layers of the inventive face mask.

## Claims

1. Face mask for protection against infectious agents with a filter medium, which comprises at least two spunbond nonwoven layers, which comprise multicomponent filaments, which are split at least partially into elementary filaments, and at least one meltblown fiber layer which is positioned between the two spunbond nonwoven layers.

2. Face mask according to claim 1, wherein each spunbond nonwoven layer was consolidated by hydroentangling, such that the multicomponent filaments were split at least partially into the elementary filaments, before combination with the meltblown layer.

3. Face mask according to at least one of the preceding claims, wherein the elementary filaments have a titer from 0.05 to 0.4 dtex.

4. Face mask according to at least one of the preceding claims, wherein the multicomponent filaments comprise at least 8 elementary filaments, preferably at least 16 elementary filaments, wherein the multicomponent filaments are preferably bicomponent filaments, which have a pie-shaped structure (PIE-structure).

5. Face mask according to at least one of the preceding claims, wherein fibers of one layer of the filter medium do not protrude into another layer of the filter medium.

6. Face mask according to at least one of the preceding claims, wherein the filter medium has a basis weight of 40 to 300 g/m², the spunbond nonwoven layers have basis weights of 10 to 60 g/m² and/or the meltblown fiber layer has a basis weight of 10 to 50 g/m².

7. Face mask according to at least one of the preceding claims, wherein the spunbond nonwoven layer is not electrostatically charged and/or the meltblown layer is electrostatically charged.

8. Face mask according to at least one of the preceding claims, which comprises at least one further layer which is not a filter medium.

9. Face mask according to at least one of the preceding claims, wherein the filter medium consists of the at least two layers of spunbond nonwoven and the at least one layer of meltblown fibers.

10. Face mask according to at least one of the preceding claims, which has a bacterial filtration efficiency (BFE) of at least 95%, determined according to DIN EN 14683:2019, and/or a differential pressure of less than 40 Pa/cm², determined according to DIN EN 14683:2019.

11. Face mask according to at least one of the preceding claims with the following features:
- The filter medium consists of two spunbond nonwoven layers and one meltblown fiber layer,
- the filter medium has a basis weight of 50 to 150 g/m²,
- the face mask does not comprise an additional layer, and
- the multicomponent filaments were split at least partially into the elementary filaments by hydroentangling before the spunbond nonwoven layers were combined with the meltblown layer.

12. Face mask according to at least one of the preceding claims, which is a medical face mask, a mouth and nose protection, a folding mask, a mask basket, a filtering half mask, or a comparable protection of mouth and nose.

13. Use of a face mask according to at least one of the preceding claims for filtering air and/or for removing infectious agents from air.

14. Use of a filter medium, which comprises at least two layers of spunbond nonwoven, which comprise multicomponent filaments, which are split at least partially into elementary filaments, and a layer of meltblown fibers, which is positioned between the two layers of spunbond nonwoven, for removing infectious agents from air.

15. A filter medium for removing infectious agents from air, which comprises at least two layers of spunbond nonwoven, which comprise multicomponent filaments, which are split at least partially into elementary filaments, and a layer of meltblown fibers, which is positioned between the two layers of spunbond nonwoven, wherein the filter medium has a basis weight of 60 to 200 g/m², wherein the multicomponent filaments were split by hydroentangling before the spunbond nonwoven layers were combined with the meltblown layer.

## Amended claims

### Amended claims in accordance with Rule 137(2) EPC.

1. Face mask for protection against infectious agents with a filter medium, which comprises at least two spunbond nonwoven layers, which comprise multicomponent filaments, which are split at least partially into elementary filaments, and at least one meltblown fiber layer which is positioned between the two spunbond nonwoven layers, wherein fibers of one layer of the filter medium do not protrude into another layer of the filter medium.

2. Face mask according to claim 1, wherein each spunbond nonwoven layer was consolidated by hydroentangling, such that the multicomponent filaments were split at least partially into the elementary filaments, before combination with the meltblown layer.

3. Face mask according to at least one of the preceding claims, wherein the elementary filaments have a titer from 0.05 to 0.4 dtex.

4. Face mask according to at least one of the preceding claims, wherein the multicomponent filaments comprise at least 8 elementary filaments, preferably at least 16 elementary filaments, wherein the multicomponent filaments are preferably bicomponent filaments, which have a pie-shaped structure (PIE-structure).

5. Face mask according to at least one of the preceding claims, wherein the filter medium has a basis weight of 40 to 300 g/m², the spunbond nonwoven layers have basis weights of 10 to 60 g/m² and/or the meltblown fiber layer has a basis weight of 10 to 50 g/m².

6. Face mask according to at least one of the preceding claims, wherein the spunbond nonwoven layer is not electrostatically charged and/or the meltblown layer is electrostatically charged.

7. Face mask according to at least one of the preceding claims, which comprises at least one further layer which is not a filter medium.

8. Face mask according to at least one of the preceding claims, wherein the filter medium consists of the at least two layers of spunbond nonwoven and the at least one layer of meltblown fibers.

9. Face mask according to at least one of the preceding claims, which has a bacterial filtration efficiency (BFE) of at least 95%, determined according to DIN EN 14683:2019, and/or a differential pressure of less than 40 Pa/cm², determined according to DIN EN 14683:2019.

10. Face mask according to at least one of the preceding claims with the following features:
- The filter medium consists of two spunbond nonwoven layers and one meltblown fiber layer,
- the filter medium has a basis weight of 50 to 150 g/m²,
- the face mask does not comprise an additional layer, and
- the multicomponent filaments were split at least partially into the elementary filaments by hydroentangling before the spunbond nonwoven layers were combined with the meltblown layer.

11. Face mask according to at least one of the preceding claims, which is a medical face mask, a mouth and nose protection, a folding mask or a filtering half mask.

12. Use of a face mask according to at least one of the preceding claims for filtering air and/or for removing infectious agents from air.

13. Use of a filter medium, which comprises at least two layers of spunbond nonwoven, which comprise multicomponent filaments, which are split at least partially into elementary filaments, and a layer of meltblown fibers, which is positioned between the two layers of spunbond nonwoven, wherein fibers of one layer of the filter medium do not protrude into another layer of the filter medium, for removing infectious agents from air.

14. A filter medium for removing infectious agents from air, which comprises at least two layers of spunbond nonwoven, which comprise multicomponent filaments, which are split at least partially into elementary filaments, and a layer of meltblown fibers, which is positioned between the two layers of spunbond nonwoven, wherein the filter medium has a basis weight of 60 to 200 g/m², wherein the multicomponent filaments were split by hydroentangling before the spunbond nonwoven layers were combined with the meltblown layer, wherein fibers of one layer of the filter medium do not protrude into another layer of the filter medium.
